# EUROPÄISCHE PATENTSCHRIFT

(11) **EP 3 327 824 B1**
(45) Veröffentlichungstag und Bekanntmachung des Hinweises auf die Patenterteilung: **24.07.2019**
(21) Anmeldenummer: 16201066.4
(22) Anmeldetag: 29.11.2016
(51) Int. Cl.: H01M 2/16, H01M 10/42, H01M 10/0525

(54) **SEPARATOR FÜR EINE LITHIUM-IONEN-ZELLE UND LITHIUM-IONEN-ZELLE AUFWEISEND EINEN DERARTIGEN SEPARATOR**
SEPARATOR FOR A LITHIUM-ION CELL AND LITHIUM-ION CELL COMPRISING SUCH A SEPARATOR
SÉPARATEUR POUR UNE CELLULE DE TYPE LITHIUM-ION ET CELLULE DE TYPE LITHIUM-ION COMPORTANT UN TEL SÉPARATEUR

(43) Veröffentlichungstag der Anmeldung: 30.05.2018
(73) Patentinhaber: Robert Bosch GmbH, 70442 Stuttgart (DE); GS Yuasa International Ltd., Kyoto-shi, Kyoto 601-8520 (JP)
(72) Erfinder: Schroeder, Matthias, 70469 Stuttgart (DE); Wurm, Calin Iulius, 86405 Meitingen (DE); Hiller, Martin Manuel, 70469 Stuttgart (DE); Fuchs, Franz, 70191 Stuttgart (DE)
(74) Vertreter: Isarpatent

(56) Entgegenhaltungen:
- EP-A1- 2 469 624
- CN-A- 105 226 226
- GB-A- 2 070 847
- JP-A- H05 343 044
- JP-A- 2006 073 541
- JP-A- 2011 222 215
- US-A1- 2011 189 530

## Beschreibung

Die vorliegende Erfindung betrifft einen Separator für eine Batteriezelle und eine Batteriezelle aufweisend einen derartigen Separator. Ein derartiger Separator und eine derartige Batteriezelle weisen der Vorteil einer besonders großen Langzeitstabilität auf.

### Stand der Technik

Elektrochemische Energiespeicher, wie beispielsweise Lithium-Ionen-Batterien, sind in vielen täglichen Anwendungen weit verbreitet. Sie werden beispielsweise in Computern, wie etwa Laptops, Mobiltelefonen, Smartphones und bei anderen Anwendungen eingesetzt. Auch bei der zur Zeit stark vorangetriebenen Elektrifizierung von Fahrzeugen, wie etwa Kraftfahrzeugen, etwa bei elektrischen Fahrzeugen oder Hybridfahrzeugen, bieten derartige Batterien Vorteile.

Batteriezellen können dabei in unterschiedlichster Weise ausgeformt sein, weisen jedoch in üblicher Weise einen Aufbau mit einer Anode, einer Kathode und einem dazwischen angeordneten Separator auf.

Das Dokument US 2013/0224632 A1 beispielsweise beschreibt einen Separator für eine elektrochemische Batteriezelle. Ein derartiger Separator soll insbesondere eine mechanische Beschädigung einer Batteriezelle durch Dendritwachstum verhindern. Dies soll derart realisiert werden, dass der Separator metallische Barrieren aufweist, die einen direkten Weg der Dendriten versperren und ein Dendritwachstum so kinetisch und/oder thermodynamisch verhindern.

US 2014/0335395 A1 beschreibt ferner eine Batteriezelle, bei der benachbart zu einem Separator eine ionisch durchlässige und elektrisch leitfähige Schicht angeordnet ist. Dadurch können ausweislich dieses Dokuments Vorteile bezüglich der Stromverteilung und des Gewichts erzielt werden.

Die Dokumente JP 2011 222215 A, CN 105 226 226 A und US 2011/189530 A1 beschreiben Separatoren, die eine Grundschicht aufweisen, auf deren Oberfläche eine poröse metallische Beschichtung, wie etwa aus Nickel oder Aluminium, abgeschieden ist.

### Offenbarung der Erfindung

Es wird eine Separatoranordnung für eine Lithium-Ionen-Zelle beschrieben, aufweisend eine ionisch leitende und elektrisch isolierende Separatorschicht, wobei die Separatoranordnung ferner eine Reduktionsschicht mit einem Reduktionsmaterial aufweist, wobei die Reduktionsschicht eine spezifische Oberfläche aufweist, die in einem Bereich liegt von größer oder gleich 10m²/g, bevorzugt von größer oder gleich 100m²/g, beispielsweise von größer oder gleich 1000m²/g, und wobei die Reduktionsschicht porös ist und eine offene Porosität in einem Bereich von größer oder gleich 10% bis kleiner oder gleich 90%, bevorzugt von größer oder gleich 30% bis kleiner oder gleich 70%, aufweist.

Dabei bezieht sich die spezifische Oberfläche auf das entsprechende Gewicht an Reduktionsschicht. Die spezifische Oberfläche kann dabei bestimmt werden durch Gasadsorption nach dem BET-Verfahren, beispielsweise nach DIN ISO 9277:2003-05. Die Porosität bezieht sich auf den Anteil an freiem, also nicht durch einen Feststoff besetztem Volumen basierend auf dem Gesamtvolumen und weist insbesondere offene, also nach außen geöffnete Poren auf. Die offene Porosität kann beispielsweise bestimmbar sein durch das Ermitteln der relativen Dichte, also dem Quotient aus Rohdichte, also dem porösen Raumgewicht und der Reindichte, also dem nicht porösen Material.

Eine vorbeschriebene Separatoranordnung ermöglicht insbesondere eine verbesserte Langlebigkeit und Sicherheit einer mit dieser Separatoranordnung ausgestatteten Batteriezelle.

Es wird somit vorgeschlagen eine Separatoranordnung für eine elektrochemische Batteriezelle. Gemäß der vorliegenden Erfindung ist die Separatoranordnung für eine Lithium-Ionen-Zelle vorgesehen. Dabei kann die Separatoranordnung insbesondere zwischen einer Anode und einer Kathode vorgesehen sein, wie dies grundsätzlich für Separatoren in elektrochemischen Batteriezellen bekannt ist und wie dies nachfolgend mit Bezug auf die Batteriezelle im Detail beschrieben wird.

Die Separatoranordnung umfasst zunächst in an sich bekannter Weise eine ionisch leitende und elektrisch isolierende Separatorschicht. Diese kann grundsätzlich wie aus dem Stand der Technik bekannt ausgestaltet sein und für Separatoren übliche ionische und elektrische Leitfähigkeiten aufweisen, so dass die Batterie in gewünschter Weise arbeiten kann. Eine beispielhafte ionische Leitfähigkeit kann etwa in einem Bereich liegen von ≥ 10 mS/cm wohingegen eine geeignete elektrische Leitfähigkeit etwa liegen kann in einem Bereich von ≤ 1 µS/cm beziehungsweise wobei ein elektrischer Widerstand vorliegen kann in einem Bereich von >1 MOhm, wobei die vorbeschriebenen Beispiele in keiner Weise beschränkend sind.

Die Separatorschicht kann beispielsweise eine insbesondere poröse Kunststofffolie sein, etwa gebildet aus Polypropylen, die beispielsweise ausgebildet sein kann durch Extrusion und Dehnen von Polymerfolien. Dabei können Lösungsmittel verwendet werden, um eine geeignete Porosität der Separatorschicht auszubilden. Eine Mischung des Polymers mit Dibutylphthalat kann hierzu erstellt werden, anschließend kann das Dibutylphthalat mit einem geeigneten Lösungsmittel, wie etwa mit Alkohol, Ether, Aceton, Benzen, n-Hexan herausgelöst werden. Ferner kann die Separatorschicht aus einem Vlies ausgebildet sein.

Beispielsweise kann sich ein Elektrolyt in den Poren des Separators befinden. Der Elektrolyt kann ebenfalls in an sich bekannter Weise ein Lösungsmittel umfassen, in dem ein oder mehrere ionisch leitfähige Salze gelöst sind. Beispielsweise können aprotische Lösungsmittel, wie etwa Ethylencarbonat, Propylencarbonat, Dimethylcarbonat oder Diethylcarbonat Verwendung finden. Weiterhin kann als ionisch leitfähiges Salz Lithiumhexafluorophosphat (LiPF₆) verwendet werden.

Darüber hinaus kann die Separatorschicht porös sein, etwa eine offene Porosität aufweisen. Beispielhafte Porositäten liegen beispielsweise in einem Bereich von ≥ 30% bis ≤ 60%, wobei sich die Werte auf freies Volumen im Verhältnis vom Gesamtvolumen beziehen.

Zusätzlich zu der Separatorschicht umfasst die vorbeschriebene Separatoranordnung eine Reduktionsschicht. Unter einer Reduktionsschicht ist dabei eine Schicht zu verstehen, welche ein Reduktionsmaterial aufweist beziehungsweise daraus geformt ist, und deshalb dazu geeignet ist, definierte Substanzen zu reduzieren. Beispielsweise kann die Reduktionsschicht aus einem Reduktionsmaterial geformt sein, das ein Redoxpotential in einem Bereich von +0,16 V gegen das Standard Wasserstoffpotential oder vorteilhafter Weise geringer aufweist.

Bezüglich des Redoxpotentials ist dieses in an sich bekannter Weise ermittelbar gegen eine Normal-Wasserstoffelektrode bei Standardbedingungen (25 °C; 101,3 kPa (1bar) Luftdruck; pH=7,0).

Dadurch kann es insbesondere ermöglicht werden, dass eine Dendritbildung, die zu einer signifikanten Beschädigung einer Batteriezelle führen kann, verhindert wird, wie dies nachstehend beschrieben ist.

Während eines Ladevorgangs wandern Lithium-Ionen befähigt durch den Elektrolyt von der Kathode durch den Separator zu der Anode mit einem gleichzeitigen Elektronenfluss in der gleichen Richtung durch einen externen Kreis. Bei einem Entladen finden entsprechend die umgekehrten Prozesse statt. Ferner erfolgt in an sich bekannter Weise ein Einlagern der Ionen in die Aktivmaterialien, indem beim Laden die Lithium-Ionen aus der Kathode ausgebaut und in die Anode eingebaut beziehungsweise eingelagert werden.

Oftmals kann es nicht ganz verhindert werden, dass im Rahmen der Herstellung einer Batteriezelle Verunreinigungen in die Batteriezelle gelangen. Beispielsweise sind hier etwa Metallpartikel, wie etwa Kupferpartikel, zu nennen, welche bei Kontakt mit der Kathode oxidiert werden und als Cu-Ion (Cu2+ oder Cu+) in Lösung gehen. Dies kann in der Batteriezelle etwa zu einer metallischen Dendritbildung führen, die sich insbesondere von der Anode zu der Kathode einer Batteriezelle fortführen kann. Denn im Detail kann Kupfer auf der Kathode vorliegen und dort aufgrund des hohen Potentials aufgelöst beziehungsweise oxidiert werden. Die Kupferionen wandern dann zur Anode und können sich dort als Dendrit metallisch abscheiden. Derartige Dendrite können wiederum zur Kathode wachsen und die Elektroden kurzschließen.

Ein derartiger elektrischer Kurzschluss zwischen Anode und Kathode kann die Batteriezelle beschädigen oder zerstören. In einem extremen Fall kann es zu einem thermischen Durchgehen der Batteriezelle kommen.

Darüber hinaus können derartige Kontaminationen beziehungsweise Effekte zu einer signifikant reduzierten Lebensdauer führen, da, wenn derartige Verunreinigungen sich an der Anode ablagern, diese als Keime zur Reduktion von Lithium-Ionen zu elementarem Lithium führen können.

Durch die vorbeschriebene Reduktionsschicht können derartige negative Effekte jedoch verhindert oder zumindest reduziert werden. Denn die Verunreinigungen etwa der Metallionen gelangen mit der Reduktionsschicht in Kontakt und werden so reduziert zu den entsprechenden Metallen, wobei das Reduktionsmittel entsprechend oxidiert wird. Dadurch kann die Gefahr einer entsprechenden Dendritbildung verhindert oder zumindest deutlich reduziert werden, da die Ionen nicht mehr zur Anode gelangen und sich entsprechend dort nicht mehr als Dendrite anlagern können. Die Verunreinigungen sind jedoch im Rahmen der Erfindung nicht auf Metalle beziehungsweise Metallionen begrenzt.

Dabei kann ein Redoxpotential der Reduktionsschicht von +0,16 V oder weniger und damit das Ausbilden der Reduktionsschicht als vergleichsweise unedle Schicht in besonders vorteilhafter Weise sicherstellen, dass häufige Verunreinigungen, wie etwa Kupferionen, reduziert werden können. Hierzu sollte die Reduktionsschicht derart porös sein, dass eine ausreichende Durchlässigkeit, etwa für einen Elektrolyten, gegeben ist.

Durch die Reduktionsschicht kann somit effektiv verhindert werden, dass beispielsweise unerwünschte Kupferionen, wie etwa Cu²⁺, zu der Anode wandern. Denn sie werden an der Separatoranordnung reduziert, bevor sie die Anode erreichen können, wobei die Reduktionsschicht entsprechend oxidiert wird. Dabei kann es von Vorteil sein, dass die so entstehende Spezies unlöslich in dem Elektrolyt ist, da diese dann ausfallen kann und den Betrieb der Batteriezelle nicht negativ beeinflusst.

Dadurch, dass die Reduktionsschicht eine spezifische Oberfläche aufweist, die in einem Bereich liegt von größer oder gleich 10m/g, bevorzugt von größer oder gleich 100m²/g, beispielsweise von größer oder gleich 1000m²/g, und dass die Reduktionsschicht porös ist und eine offene Porosität in einem Bereich von größer oder gleich 10% bis kleiner oder gleich 90%, bevorzugt von größer oder gleich 30% bis kleiner oder gleich 70%, aufweist, können die vorbeschriebenen Redoxreaktionen dabei besonders effektiv sein. Somit kann die Gefahr einer Dendritbildung und damit etwa der Kurzschluss der Batterie signifikant reduziert werden.

Im Detail kann durch die hohe spezifische Oberfläche die Reaktionskinetik der ablaufenden Reaktion und damit der Reduktion von Verunreinigungen positiv beeinflusst werden. Denn da die Reaktionskinetik flächenabhängig ist, kann die Reduktion von Verunreinigungen an der Grenzfläche zu dem Elektrolyt beziehungsweise an der Oberfläche der Reduktionsschicht deutlich effektiver gestaltet werden.

Bezüglich der Porosität kann diese insbesondere in dem vorgenannten Bereich vorteilhaft sein, um so den lonenfluss nicht zu hemmen. In anderen Worten kann es besonders effektiv ermöglicht werden, dass die Ionen der Verunreinigungen zu der Oberfläche der Reduktionsschicht gelangen, um dort reduziert zu werden. Somit kann insbesondere durch die vorbeschriebene Kombination aus spezifischer Oberfläche und offener Porosität ein synergistischer Effekt erzielt werden, um besonders effektiv eine Dendritbildung zu verhindern.

Die vorbeschriebene Lösung bietet dabei ferner signifikante Vorteile gegenüber den Lösungen aus dem Stand der Technik. Denn diesbezüglich wurden metallische Kontaminationen beispielsweise entfernt durch Vakuum-Saugsysteme, Bürsten, Gebläse oder Magneten. Derartige Lösungen konnten jedoch oftmals die vorhandenen Kontaminationen nicht vollständig entfernen, so dass auch ein Dendritwachstum nicht vollständig verhindert werden konnte. Insbesondere kleinere Partikel, etwa in einer Größe von etwa < 50 µm, können aufgrund der nicht ausreichenden Kräfte oftmals nicht beispielsweise von der Elektrodenbeschichtung entfernt werden. Ferner kann beispielsweise ein Bürsten zum Entferner der Verunreinigungen zu einer mechanischen Beschädigung etwa des Separators oder der Elektroden führen, was den Betrieb und/oder die Sicherheit nachteilig beeinflussen kann und so zu vermeiden ist.

Derartige Nachteile können durch eine Separatoranordnung wie vorstehend beschrieben jedoch verhindert werden, da ein etwa mechanisches Entfernen metallischer Partikel nicht notwendig ist. Dadurch kann die Langlebigkeit und Sicherheit von Batteriezellen weiter verbessert werden.

Bevorzugt kann es vorgesehen sein, dass die Reduktionsschicht auf der Oberfläche der Separatorschicht vorliegt. Diese Ausgestaltung kann besonders einfach auszubilden sei, da die Reduktionsschicht auf einfache Weise aufgebracht werden kann.

Geeignete Verfahren zum Aufbringen der Reduktionsschicht umfassen grundsätzlich etwa chemische oder physikalische Abscheideverfahren. Beispielhaft seien hier die Metallbedampfung, insbesondere im Unterdruck, chemische Gasphasenabscheidung (CVD) oder die physikalische Gasphasenabscheidung (PVD) genannt. Weiter geeignet sind etwa Gleich- oder Wechselstromzerstäubung beziehungsweise DC oder AC Sputtern, insbesondere unter Argon, oder Siebdruckverfahren (Screenprinting) oder Tintenstrahldruckverfahren (Ink-Jet Printing), wie auch Sprühbeschichtungsverfahren (Spray Coating), beispielsweise von Nano-Partikeln inklusive eines Binders.

Die Einstellung der Eigenschaften der aufgebrachten Reduktionsschicht, wie insbesondere Porosität oder spezifische Oberfläche, kann in für den Fachmann bekannter Weise durch Anpassung der Abscheideparameter erfolgen.

Bezüglich der Einstellung der Porosität kann eine Einstellung beispielsweise erfolgen durch eine Einstellung der Porosität der Separatorschicht, auf welche die Reduktionsschicht aufgebracht wird, oder, etwa bei einem Sputtern, beispielsweise als DC-Magnetron-Kathodenzerstäubung, durch den angewandten Druck. Ein hoher Druck kann die Porosität verringern, wohingegen ein niedriger Druck die Porosität erhöhen kann. Bezüglich der spezifischen Oberfläche kann diese neben der Einstellung der Abscheideparameter etwa durch ein Glätten reduziert werden und erhöht werden durch ein Behandeln mit oxidativen und/oder reduzierenden Gasen. Eine Vergrößerung der spezifischen Oberfläche kann etwa erfolgen durch ein Behandeln mit einem Gemisch aus Wasserstoff und Kohlendioxid, mit einem Gemisch aus Kohlenmonoxid, Wasserstoff, Wasser und Stickstoff oder mit einem Gemisch aus Kohlenmonoxid und Sauerstoff.

Beispielhafte Parameter eines Sputter-Prozesses zum Aufbringen einer Reduktionsschicht umfassen etwa eine Leistungsdichte von 0.1 bis 10W/cm², beispielhaft von 1.2W/cm², eine Abscheidedauer von 1 Sekunde bis 1 Stunde, beispielhaft von 5min und einen Druck in der Abscheidekammer von 0.01 bis 10 x 10⁻⁶mbar, beispielhaft von 6 x 10⁻⁶mbar).

Beispielsweise bei den vorgenannten Verfahren kann eine besonders dünne Schichtdicke des Reduktionsmittels erzeugt werden, was Vorteile ermöglichen kann bezüglich einer Materialeinsparung, und damit der benötigten Herstellungskosten, oder auch Vorteile bezüglich eines geringen Gewichts, was beispielsweise bei mobilen oder portablen Anwendungen von Vorteil sein kann. Ferner kann insbesondere in dieser Ausgestaltung eine Oberfläche erzeugt werden, die für eine entsprechende Redoxreaktion besonders vorteilhaft ist und diese somit signifikant begünstigen kann. Insbesondere kann durch die vorbeschriebenen Verfahren eine Reduktionsschicht mit vorbeschriebener Porosität und spezifischer Oberfläche erzeugt werden.

Es kann weiterhin bevorzugt sein, dass das Reduktionsmaterial ein Metall ist. Insbesondere Metalle können effektive Reduktionsmittel sein, was die vorbezeichnete Redoxreaktion besonders sicher realisieren kann und entsprechend die Gefahr einer Beschädigung einer Batteriezelle besonders sicher verringern kann. Darüber hinaus sind insbesondere Metalle unter den in einer Batteriezelle vorliegenden Bedingungen stabil beziehungsweise unterliegen keinen unerwünschten Nebenreaktionen, was auch nach einer vergleichsweise langen Arbeitsdauer einer Batteriezelle den vorbeschriebenen Sicherheitsgewinn erlauben kann.

Beispielhafte Metalle, die sich im Rahmen der vorliegenden Erfindung als geeignet erwiesen haben, umfassen beispielsweise Titan, Aluminium und Nickel. Neben geeigneten Redoxeigenschaften zeichnen sich die vorbeschriebenen Metalle insbesondere dadurch aus, dass diese bei einer Oxidation bei den in einer Batteriezelle herrschenden Bedingungen in unlösliche Verbindungen umgewandelt werden. Beispielsweise erfolgt eine Umsetzung von Aluminium in AlOₓF_{y}, von Titan in TiO₂ oder TiOₓF_{y}.

Weiterhin kann es bevorzugt sein, dass die Reduktionsschicht auf der der Separatorschicht gegenüberliegenden Seite mit einer porösen Schutzschicht versehen ist. Durch das Vorsehen einer derartigen Schutzschicht kann das Lösen der Reduktionsschicht verhindert werden, was die Langlebigkeit weiter verbessern kann. Zweckmäßiger Weise ist die Schutzschicht dabei ebenfalls porös, um einen Zugang des insbesondere flüssigen Elektrolyten mit den Verunreinigungen zu der Reduktionsschicht zu ermöglichen. Weiterhin kann durch die Schutzschicht eine effektive elektrische Isolierung zwischen Elektrode und Reduktionsschicht ermöglicht werden, wenn die Schutzschicht etwa als elektrischer Isolator ausgestaltet ist. Als Schutzschicht kann beispielsweise eine Polymerschicht, wie etwa eine aus einem Bindermaterial geformte Schicht, beispielsweise Polyvinylidenfluorid, (PVDF), Styrol-Butadien-Kautschuk (SBR), Croscarmellose-Natrium (NaCMC), dienen. Weiterhin kann die Schutzschicht aus den oben genannten Materialien in Kombination mit Keramikpartikeln wie zum Beispiel Aluminiumoxid (Al₂O₃) ausgestaltet sein.

Beispielsweise kann das Bindermaterial beziehungsweise das mit Keramikpartikeln versetzte Bindermaterial mit Dibutylphthalat und einem Lösungsmittel gemischt und auf die Reduktionsschicht aufgebracht werden. Anschließend kann das Dibutylphthalat mit einem geeigneten Lösungsmittel, wie beispielsweise einem Alkohol, einem Ether, mit Aceton, Benzen, oder n-Hexan herausgelöst werden, um so eine poröse Struktur zu schaffen.

Hinsichtlich weiterer technischer Merkmale und Vorteile der vorbeschriebenen Separatoranordnung wird hiermit auf die nachfolgende Beschreibung der Batteriezelle, die Figuren sowie die Figurenbeschreibung verwiesen und umgekehrt.

Gegenstand der vorliegenden Erfindung ist eine Lithium-Ionen-Zelle, aufweisend eine Anode, eine Kathode und eine zwischen Anode und Kathode angeordnete Separatorschicht. Dabei ist es vorgesehen, dass die Separatorschicht Teil einer Separatoranordnung ist, wie diese vorstehend im Detail beschrieben ist.

Somit weist die Lithium-Ionen-Zelle eine Anode, eine Kathode und eine zwischen Anode und Kathode angeordnete Separatorschicht auf.

In diesem Fall kann die Anode beispielsweise umfassen oder ausgestaltet sein aus metallischem Lithium oder aus einem Material, welches Lithiumionen einlagern beziehungsweise interkalieren und wieder auslagern beziehungsweise deinterkalieren kann. Ein derartiges Anodenmaterial kann beispielsweise auf einen Stromableiter aufgebracht, wie etwa aufgerakelt, sein. Beispielhafte Anodenmaterialien umfassen etwa Kohlenstoff, wie beispielsweise amorphen Kohlenstoff, Graphit oder Ruß, Silizium, Zinn oder Lithiumtitanat. Alternativ oder zusätzlich kann der Stromableiter beispielsweise aus Kupfer, etwa als Kupferfolie, ausgestaltet sein. Die Kathode kann entsprechend beispielhaft Lithium-Nickel-Mangan-Kobalt-Oxid (NMC, beispielsweise HE-NMC), Spinell oder Lithium-Cobalt-Oxid (LiCoO₂) aufweisen oder daraus ausgestaltet sein und ebenfalls auf einen Stromableiter, etwa aus Aluminium, beispielsweise Aluminiumfolie, aufgebracht sein. Dabei kann das Kathodenmaterial wie auch das Anodenmaterial gegebenenfalls in einem Binder, wie beispielsweise Polyvinylidenfluorid (PVDF) etwa zusammen mit einem Leitzusatz, wie etwa einer elektrisch leitfähigen Kohlenstoffverbindung, beispielsweise Graphit oder Ruß, vorliegen.

Bezüglich der Separatoranordnung wird auf die vorstehende Beschreibung verwiesen.

Beispielsweise kann die Batteriezelle in Form einer auch als Jelly Roll bezeichneten gerollten beziehungsweise gewickelten Anordnung vorliegen, um hohe Leistungsdaten zu ermöglichen. Die Batteriezelle ist jedoch nicht auf die vorbeschriebene Ausgestaltung beschränkt, sondern kann grundsätzlich jegliche Form annehmen.

Zusammenfassend kann bei einer vorbeschriebenen Batteriezelle somit eine verbesserte Langlebigkeit und eine verbesserte Sicherheit ermöglicht werden. Somit kann es insbesondere vorgesehen sein, dass innerhalb der Batteriezelle, beispielsweise in dem flüssigen Elektrolyten, eine metallische Verunreinigung vorliegt, wobei die Reduktionsschicht unedler ist, als die beispielsweise metallische Verunreinigung.

Besonders bevorzugt kann die Reduktionsschicht zwischen der Separatorschicht und der Anode positioniert sein. Insbesondere in dieser Ausgestaltung kann eine Reduzierung der Verunreinigungen beispielsweise von reduzierbaren Metallsalzen, etwa Kupfersalzen, effektiv verhindert werden. Denn insbesondere in dieser Ausgestaltung ist die Reduktionsschicht in Nachbarschaft zu der Anode, bei welcher die Reduzierung der Verunreinigungen besonders sinnvoll ist.

Grundsätzlich kann es jedoch auch vorteilhaft sein, die die Reduktionsschicht zwischen der Separatorschicht und der Kathode zu positionieren.

Hinsichtlich weiterer technischer Merkmale und Vorteile der vorbeschriebenen Batteriezelle wird hiermit auf die Beschreibung der Separatoranordnung, die Figuren sowie die Figurenbeschreibung verwiesen und umgekehrt.

### Zeichnungen

Weitere Vorteile und vorteilhafte Ausgestaltungen der erfindungsgemäßen Gegenstände werden durch die Zeichnungen veranschaulicht und in der nachfolgenden Beschreibung erläutert, wobei die beschriebenen Merkmale einzeln oder in einer beliebigen Kombination ein Gegenstand der vorliegenden Erfindung sein können, insoweit sich aus dem Kontext nicht eindeutig das Gegenteil ergibt. Dabei ist zu beachten, dass die Zeichnungen nur beschreibenden Charakter haben und nicht dazu gedacht sind, die Erfindung in irgendeiner Form einzuschränken. Es zeigen
- Fig. 1: eine schematische Ansicht einer Batteriezelle mit einer Separatoranordnung;
- Fig. 2: eine schematische Ansicht der Batteriezelle aus Fig. 1 mit in der Kathode vorliegenden Verunreinigungen; und
- Fig. 3: eine schematische Ansicht der Batteriezelle aus Fig. 2 mit an der Reduktionsschicht reduzierten Verunreinigungen.

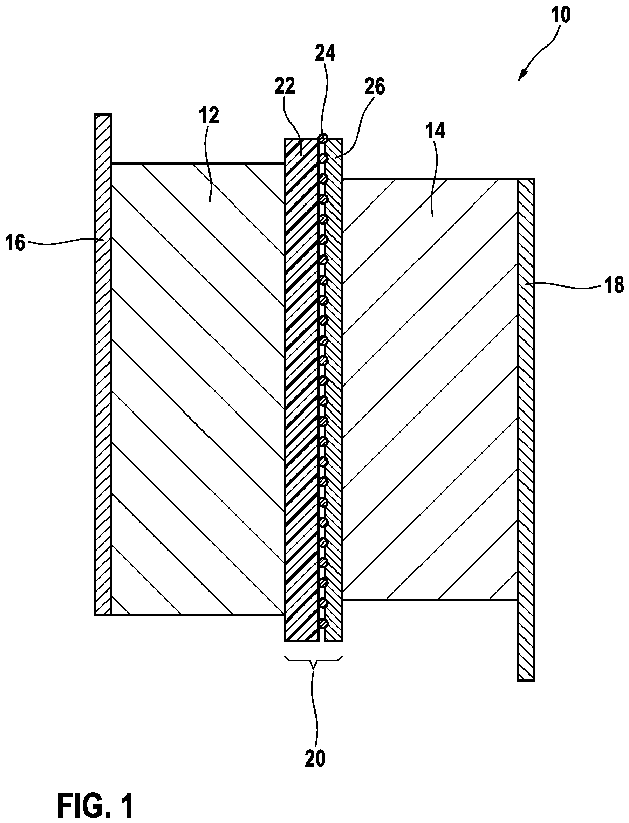

In der Figur 1 ist eine Batteriezelle 10 gezeigt, welche eine Anode 12 und eine Kathode 14 aufweist. Benachbart zu der Anode 12 und elektrisch kontaktiert mit dieser ist eine Kupferfolie als Stromableiter 16 vorgesehen, und benachbart zu der Kathode 14 und elektrisch kontaktiert mit dieser ist eine Aluminiumfolie als Stromableiter 18 vorgesehen.

Es ist ferner zwischen Anode 12 und Kathode 14 eine Separatoranordnung 20 vorgesehen. Die Separatoranordnung 20 umfasst eine ionisch leitende und elektrisch isolierende Separatorschicht 22 und eine Reduktionsschicht 24, wobei die Reduktionsschicht 24 aus einem Reduktionsmaterial geformt ist, das ein Redoxpotential in einem Bereich von +0,16 V oder geringer aufweisen kann. Die Reduktionsschicht kann etwa aus einer porösen Schicht aus Titan, Aluminium oder Nickel ausgebildet sein. Es ist ferner vorgesehen, dass die Reduktionsschicht 24 eine spezifische Oberfläche aufweist, die in einem Bereich liegt von größer oder gleich 10m²/g, bevorzugt von von größer oder gleich 100m²/g, beispielsweise von größer oder gleich 1000m²/g, und wobei die Reduktionsschicht 24 porös ist und eine offene Porosität in einem Bereich von größer oder gleich 10% bis kleiner oder gleich 90%, bevorzugt von größer oder gleich 30% bis kleiner oder gleich 70%, aufweist.

Figur 1 zeigt weiterhin, dass die Reduktionsschicht 24 auf der der Separatorschicht 22 gegenüberliegenden Seite mit einer Schutzschicht 26 versehen ist.

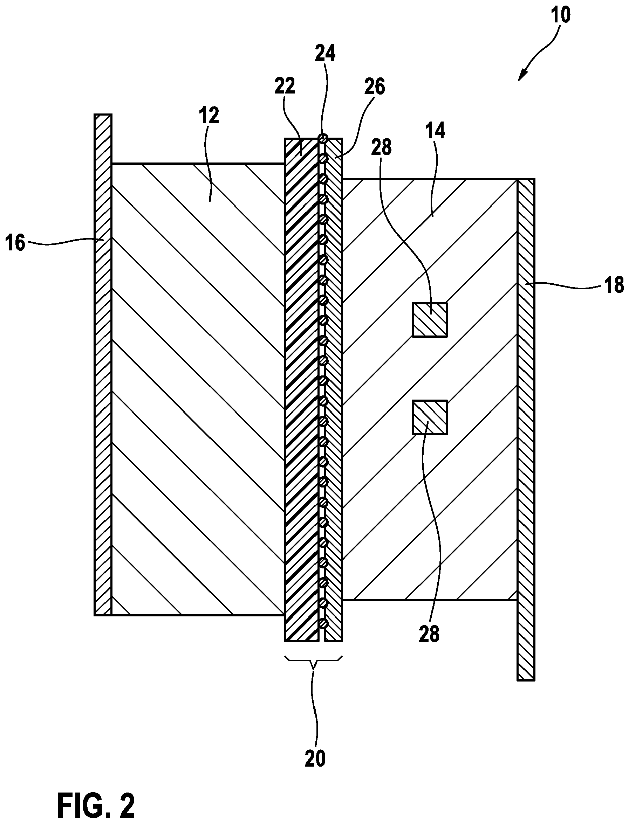

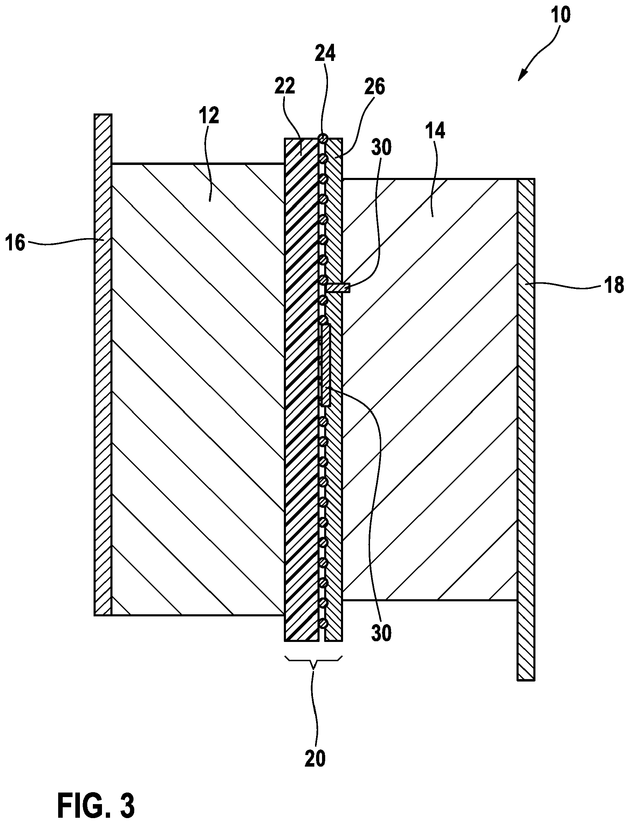

Der positive Effekt der Separatorschicht 20 beziehungsweise der mit der Separatorschicht 20 versehenen Batteriezelle 10 ist in den Figuren 2 und 3 gezeigt. In der Figur 2 ist eine entladene Batteriezelle 10 gezeigt, bei der eine metallische Verunreinigung 28 in der Kathode 14 vorliegt. Bei einem Ladevorgang löst sich die metallische Verunreinigung oxidativ auf und diffundiert als Metallion in Richtung der Separatoranordnung 20 und kommt mit der Reduktionsschicht 24 in Kontakt. Dort wird das Metallion reduziert und scheidet sich wiederum elementar als Metallpartikel 30 ab.

## Patentansprüche

1. Batteriezelle in Form einer Lithium-Ionen-Zelle, aufweisend eine Anode (12), eine Kathode (14) und eine zwischen Anode (12) und Kathode (14) angeordnete ionisch leitende und elektrisch isolierende Separatorschicht (22), **dadurch gekennzeichnet, dass** die Separatorschicht (22) Teil einer Separatoranordnung (20) ist, wobei die Separatoranordnung (20) ferner eine Reduktionsschicht (24) mit einem Reduktionsmaterial aufweist, wobei die Reduktionsschicht (24) eine spezifische Oberfläche aufweist, die in einem Bereich liegt von größer oder gleich 10m²/g, bevorzugt von größer oder gleich 100m²/g, beispielsweise von größer oder gleich 1000m²/g, und wobei die Reduktionsschicht (24) porös ist und eine offene Porosität in einem Bereich von größer oder gleich 10% bis kleiner oder gleich 90%, bevorzugt von größer oder gleich 30% bis kleiner oder gleich 70%, aufweist.

2. Batteriezelle nach Anspruch 1, **dadurch gekennzeichnet, dass** die Reduktionsschicht (24) aus einem Reduktionsmaterial geformt ist, das ein Redoxpotential in einem Bereich von +0,16 V gegen die Standard-Wasserstoffelektrode oder geringer aufweist.

3. Batteriezelle nach Anspruch 1 oder 2, **dadurch gekennzeichnet, dass** die Reduktionsschicht (24) auf der Oberfläche der Separatorschicht (22) vorliegt.

4. Batteriezelle nach einem der Ansprüche 1 bis 3, **dadurch gekennzeichnet, dass** das Reduktionsmaterial ein Metall ist.

5. Batteriezelle nach Anspruch 4, **dadurch gekennzeichnet, dass** das Reduktionsmaterial ausgewählt ist aus der Gruppe bestehend aus Titan, Aluminium und Nickel.

6. Batteriezelle nach einem der Ansprüche 1 bis 5, **dadurch gekennzeichnet, dass** die Reduktionsschicht (24) auf der der Separatorschicht (22) gegenüberliegenden Seite mit einer porösen Schutzschicht (26) versehen ist.

7. Batteriezelle nach Anspruch 6, **dadurch gekennzeichnet, dass** die Schutzschicht (26) aus einem elektrisch isolierenden Material geformt ist.

8. Batteriezelle nach Anspruch 7, **dadurch gekennzeichnet, dass** die Reduktionsschicht (24) zwischen der Separatorschicht (22) und der Anode (12) positioniert ist.

## Claims

1. Battery cell in the form of a lithium-ion cell, comprising an anode (12), a cathode (14) and an ionically conductive and electrically insulating separator layer (22) arranged between anode (12) and cathode (14), **characterized in that** the separator layer (22) is part of a separator arrangement (20), wherein the separator arrangement (20) furthermore comprises a reduction layer (24) comprising a reduction material, wherein the reduction layer (24) has a specific surface area which lies in a range of greater than or equal to 10m²/g, preferably of greater than or equal to 100m²/g, for example of greater than or equal to 1000m²/g, and wherein the reduction layer (24) is porous and has an open porosity in a range of greater than or equal to 10% to less than or equal to 90%, preferably of greater than or equal to 30% to less than or equal to 70%.

2. Battery cell according to Claim 1, **characterized in that** the reduction layer (24) is shaped from a reduction material having a redox potential in a range of +0.16V relative to the standard hydrogen electrode or less.

3. Battery cell according to Claim 1 or 2, **characterized in that** the reduction layer (24) is present on the surface of the separator layer (22).

4. Battery cell according to any of Claims 1 to 3, **characterized in that** the reduction material is a metal.

5. Battery cell according to Claim 4, **characterized in that** the reduction material is selected from the group consisting of titanium, aluminium and nickel.

6. Battery cell according to any of Claims 1 to 5, **characterized in that** the reduction layer (24) is provided with a porous protective layer (26) on the opposite side with respect to the separator layer (22).

7. Battery cell according to Claim 6, **characterized in that** the protective layer (26) is shaped from an electrically insulating material.

8. Battery cell according to Claim 7, **characterized in that** the reduction layer (24) is positioned between the separator layer (22) and the anode (12).

## Revendications

1. Cellule de batterie sous la forme d'une cellule aux ions de lithium, comprenant une anode (12), une cathode (14) et une couche séparatrice (22) disposée entre l'anode (12) et la cathode (14), conductrice d'ions et électriquement isolante, **caractérisée en ce que** la couche séparatrice (22) est une partir d'un arrangement séparateur (20), l'arrangement séparateur (20) possédant en outre une couche de réduction (24) avec un matériau de réduction, la couche de réduction (24) possédant une surface spécifique qui est de l'ordre de 10 m²/g ou plus, de préférence égale à 100 m²/g ou plus, par exemple égale à 1000 m²/g ou plus, et la couche de réduction (24) étant poreuse et possédant une porosité ouverte de l'ordre de 10 % ou plus à 90 % ou moins, de préférence de 30 % ou plus à 70 % ou moins.

2. Cellule de batterie selon la revendication 1, **caractérisée en ce que** la couche de réduction (24) est formée à partir d'un matériau de réduction qui possède un potentiel redox de l'ordre de +0,16 V ou moins par rapport à l'électrode à hydrogène standard.

3. Cellule de batterie selon la revendication 1 ou 2, **caractérisée en ce que** la couche de réduction (24) se trouve sur la surface de la couche séparatrice (22).

4. Cellule de batterie selon l'une des revendications 1 à 3, **caractérisée en ce que** le matériau de réduction est un métal.

5. Cellule de batterie selon la revendication 4, **caractérisée en ce que** le matériau de réduction est choisi dans le groupe composé du titane, de l'aluminium et du nickel.

6. Cellule de batterie selon l'une des revendications 1 à 5, **caractérisée en ce que** la couche de réduction (24), sur le côté à l'opposé de la couche séparatrice (22), est pourvue d'une couche de protection (26) poreuse.

7. Cellule de batterie selon la revendication 6, **caractérisée en ce que** la couche de protection (26) est formée à partir d'un matériau électriquement isolant.

8. Cellule de batterie selon la revendication 6, **caractérisée en ce que** la couche de réduction (24) est positionnée entre la couche séparatrice (22) et l'anode (12).
